# FASCICULE DE BREVET EUROPEEN

(11) **EP 2 945 817 B1**
(45) Date de publication et mention de la délivrance du brevet: **21.03.2018**
(21) Numéro de dépôt: 14705813.5
(22) Date de dépôt: 16.01.2014
(51) Int. Cl.: H01M 10/42, H01M 10/44, H02J 7/00, B60L 11/18

(54) **GESTION DE LA CHARGE D'UNE BATTERIE**
VERWALTUNG DER LADUNG EINER BATTERIE
MANAGEMENT OF THE CHARGE OF A BATTERY

(30) Priorité: 17.01.2013 FR 1350408
(43) Date de publication de la demande: 25.11.2015
(73) Titulaire: Renault S.A.S., 92100 Boulogne-Billancourt (FR)
(72) Inventeur: DELOBEL, Bruno, F-75015 Paris (FR); SAINT-MARCOUX, Antoine, F-91120 Palaiseau (FR); GIRAUD, Marc-Henri, F-92130 Issy-les-Moulineaux (FR)
(86) Numéro de dépôt international: PCT/FR2014/050079
(87) Numéro de publication internationale: WO 2014/111659

(56) Documents cités:
- WO-A1-96/19026
- WO-A1-2008/056316
- WO-A2-2011/122946
- DE-A1- 10 158 062
- FR-A1- 2 963 855

## Description

L'invention concerne la gestion de la charge d'une batterie, notamment d'une batterie de véhicule électrique ou hybride.

Le temps de charge d'une batterie peut conditionner le choix d'un client entre un véhicule électrique et un autre. Afin d'accélérer la charge, il est possible de charger la batterie avec une tension relativement élevée mais ceci peut dégrader la batterie et donc limiter sa durée de vie.

On cherche donc en général à concilier temps de charge et durée de vie de la batterie.

Il est connu, par exemple du document WO2011122946, de gérer la charge d'une batterie en deux phases
- Une phase de charge rapide (« boost » en anglais) dans laquelle la tension aux bornes de la batterie évolue jusqu'à atteindre une valeur de tension limite nécessaire correspondant à la capacité souhaitée ou à l'énergie chargée souhaitée. Au cours de cette première phase, on peut par exemple charger la batterie à courant constant.
- Une phase d'absorption pendant laquelle la tension aux bornes de la batterie reste relativement constante autour de cette valeur de tension limite. Au cours de cette deuxième phase, on peut par exemple maintenir la tension autour de cette valeur limite, de sorte que le courant de charge décroît avec le temps. On peut aussi envisager d'appliquer un courant constant et, lorsque la valeur de tension limite est atteinte, de réduire ce courant d'un facteur donné, par exemple 0,8. On parle alors de charges par paliers ou « multisteps » en anglais.

Le document WO 2008/056316 A1 divulgue également un procédé de charge d'une batterie pouvant être amélioré.

Il existe un besoin pour une charge de batterie plus performante en termes de compromis rapidité de chargement/durée de vie de la batterie.

Il est proposé un procédé de gestion de la charge d'une batterie de véhicule automobile par exemple comprenant :
- commander une phase de charge rapide à tension croissante, puis
- commander une phase d'absorption à courant décroissant régulé à une première valeur de tension.

On commande la phase de charge rapide jusqu'à ce que la tension aux bornes de la batterie atteigne une deuxième valeur de tension strictement supérieure à la première valeur de tension.

Ainsi, on utilise une tension d'arrêt de la phase de charge rapide supérieure à la tension correspondant à la capacité et/ou l'énergie chargée(s) souhaitée(s). Ceci peut permettre de prolonger la phase de charge rapide, cette phase étant de fait celle pour laquelle le ratio entre l'énergie/capacité chargée et le temps de charge est le plus élevé.

En outre, le temps passé à une tension relativement élevée est relativement court, ce qui permet de garantir une certaine durabilité de la batterie.

La première valeur de tension peut avantageusement correspondre à une tension maximale prédéfinie pour cette batterie.

Ainsi, au cours de la phase de charge rapide, on charge la batterie au-delà de la valeur prédéfinie correspondant à cette batterie.

Comme cette valeur limite est en fait susceptible de varier au cours de la vie de la batterie, par exemple en passant de 4,08 volts à 4,126 volts, le procédé décrit ci-dessus peut permettre d'éviter de limiter inutilement la charge alors que la batterie est capable d'absorber une puissance plus élevée sans être endommagée.

La batterie peut être par exemple une batterie de véhicule électrique et/ou hybride, par exemple une batterie de traction de ce type de véhicules.

L'invention n'est en rien limitée par la façon dont se déroule la phase de charge rapide.

Par exemple, on peut prévoir de commander cette phase de charge rapide de sorte que le courant de charge soit constant pendant toute cette phase ou bien pendant une partie seulement de cette phase. Dans un autre mode de réalisation, on peut prévoir de commander cette phase de charge rapide de sorte que la puissance de charge soit constante pendant tout ou partie de la phase de charge rapide.

L'invention n'est pas non plus limitée par la façon dont se déroule la phase d'absorption, ni en particulier par la façon dont on régule la tension à la première valeur de tension.

En particulier, on pourra prévoir de réguler la tension à plusieurs valeurs de tension, par exemple à un ensemble de tensions successives ordonnées par valeurs décroissantes, ou bien encore à une première et à une deuxième valeur de tension.

La phase d'absorption peut intervenir dès la fin de la phase de charge rapide, c'est-à-dire dès que l'on détecte que la tension aux bornes de la batterie a atteint la deuxième valeur de tension, ou bien ultérieurement.

Par exemple, on pourra prévoir d'imposer, suite à la détection de ce que la valeur de tension aux bornes de la batterie a atteint la deuxième valeur de tension, une charge à tension constante égale à cette valeur de tension pendant un laps de temps prédéterminé ou non.

Dans un mode de réalisation, au cours de la phase d'absorption, la tension est constante. Cette tension peut par exemple être égale à la valeur de tension limite correspondant à cette batterie, ou bien à une ou plusieurs autres valeurs.

Par exemple, on pourra prévoir d'imposer une tension constante égale à la deuxième valeur de tension pendant un laps de temps prédéterminé, puis d"imposer une tension constante égale à la première valeur de tension.

Dans un autre mode de réalisation, on pourra prévoir d'imposer un courant de charge ou une puissance de charge constant(e)s tant que la tension est inférieure à une valeur cible, par exemple la première valeur de tension. Dès que la tension aux bornes de la batterie atteint la première valeur, on diminue la valeur de la puissance de charge ou du courant de charge, par exemple on applique un coefficient de valeur inférieure à un, par exemple 0,8 ou autre, à la valeur de tension ou de puissance imposée. On procède ainsi par paliers pour réguler la tension aux bornes de la batterie à la première valeur de tension.

Dans un autre mode de réalisation, on pourra prévoir d'appliquer un profil de puissance afin d'amener la tension à la valeur cible, par exemple la première valeur de tension. Ce profil de puissance peut par exemple être déterminé à partir d'une modélisation de la batterie.

Bien entendu, on pourra combiner les différentes stratégies de contrôle de la tension aux bornes de la batterie permettant d'amener cette tension de la deuxième valeur de tension à la première valeur de tension. Par exemple, on pourra prévoir d'imposer une tension constante à une valeur égale à la deuxième valeur de tension pendant un laps de temps, puis d'appliquer un profil de puissance.

L'invention n'est pas non plus limitée par la façon dont on commande la phase de charge rapide et la phase d'absorption. Par exemple, on pourra prévoir de générer un signal de commande et de transmettre le signal généré vers des moyens de raccord électriques entre la batterie et une source d'énergie, par exemple une borne de charge, le secteur, un alternateur ou autre.

Il est en outre proposé un produit programme d'ordinateur comprenant des instructions pour effectuer les étapes du procédé décrit ci-dessus, lorsque ces instructions sont exécutées par des moyens numériques de traitement du signal, par exemple un processeur. Ce programme d'ordinateur peut être stocké sur un disque dur, téléchargé ou autre.

Il est en outre proposé un dispositif de gestion de la charge d'une batterie de véhicule automobile comprenant :
- des moyens de réception de valeurs de tension mesurées aux bornes de la batterie.
- des moyens de traitement agencés pour commander une phase de charge rapide à tension croissante, puis une phase d'absorption à courant décroissant régulé à une première valeur de tension, ces moyens de traitement étant conformés pour commander la phase de charge rapide jusqu'à ce qu'une valeur reçue de tension aux bornes de la batterie atteigne une deuxième valeur de tension supérieure à la première valeur de tension.

Ce dispositif peut par exemple comprendre ou être intégré dans un ou plusieurs processeurs, par exemple un microcontrôleur, un microprocesseur ou autre.

Ce dispositif peut être intégré dans un véhicule, par exemple dans un système de gestion de batterie ou BMS (de l'anglais « Battery Management System »), ou non. Par exemple, le dispositif décrit ci-dessus peut être intégré dans une borne de charge de véhicule électrique.

Les moyens de réception peuvent par exemple comprendre une broche d'entrée, un port d'entrée ou autre. Les moyens de traitement peuvent par exemple comprendre un coeur de processeur ou CPU (de l'anglais « Central Processing Unit »).

Il est en outre proposé un système de batterie pour un véhicule automobile comprenant le dispositif de gestion de la charge décrit ci-dessus ainsi que des moyens de charge d'une batterie et/ou la batterie elle-même. Ces moyens de charge peuvent par exemple comprendre une borne de charge, un alternateur ou autre.

Il est en outre proposé un véhicule, par exemple un véhicule électrique et/ou hybride, comprenant le système et/ou le dispositif décrit ci-dessus.

L'invention sera mieux comprise en référence aux figures suivantes, lesquelles illustrent des modes de réalisation non limitatifs.
La figure 1 montre un exemple de système de charge de batterie de véhicule automobile, selon un mode de réalisation de l'invention.
La figure 2A est un graphique montrant la tension aux bornes d'une cellule de batterie en fonction du temps, lorsqu'on applique un premier exemple de procédé selon un mode de réalisation de l'invention.
La figure 2B est un graphique montrant la puissance chargée en kW en fonction du temps de charge, lors de l'application de ce premier exemple de procédé.
La figure 3A est un graphique montrant la tension aux bornes d'une cellule de batterie en fonction du temps, lorsqu'on applique un deuxième exemple de procédé selon un mode de réalisation de l'invention.
La figure 3B est un graphique montrant la puissance chargée en kW en fonction du temps de charge, lors de l'application de ce deuxième exemple de procédé.
La figure 4A est un graphique montrant la tension aux bornes d'une cellule de batterie en fonction du temps, lorsqu'on applique un troisième exemple de procédé selon un mode de réalisation de l'invention.
La figure 4B est un graphique montrant la puissance chargée en kW en fonction du temps de charge, lors de l'application de ce troisième exemple de procédé.
La figure 5A est un graphique montrant la tension aux bornes d'une cellule de batterie en fonction du temps, lorsqu'on applique un quatrième exemple de procédé selon un mode de réalisation de l'invention.
La figure 5B est un graphique montrant la puissance chargée en kW en fonction du temps de charge, lors de l'application de ce quatrième exemple de procédé.
La figure 6A est un graphique montrant la tension aux bornes d'une cellule de batterie en fonction du temps, lorsqu'on applique un cinquième exemple de procédé selon un mode de réalisation de l'invention.
La figure 6B est un graphique montrant la puissance chargée en kW en fonction du temps de charge, lors de l'application de ce cinquième exemple de procédé.
La figure 7A est un graphique montrant la tension aux bornes d'une cellule de batterie en fonction du temps, lorsqu'on applique un sixième exemple de procédé selon un mode de réalisation de l'invention.
La figure 7B est un graphique montrant la puissance chargée en kW en fonction du temps de charge, lors de l'application de ce sixième exemple de procédé.

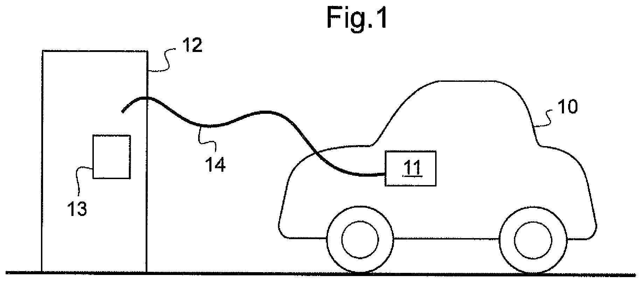

En référence à la figure 1, un véhicule automobile électrique 10 comprend une batterie de traction 11, laquelle peut être rechargée au moyen d'une borne de charge 12 raccordée au réseau électrique.

La batterie 11 peut par exemple être une batterie lithium ion.

La borne 12 peut par exemple être une borne de charge rapide fournissant un courant continu à la batterie 11 du véhicule 10.

Cette borne 12 peut intégrer un dispositif de gestion de la charge 13, par exemple un processeur. Ce processeur comporte des moyens de réception non représentés, par exemple une broche d'entrée en communication électrique avec des capteurs non représentés du véhicule automobile 10. Les mesures issues de ces capteurs peuvent ainsi transiter par un câble de charge 14 et être reçues par le processeur 13. En particulier, le processeur 13 peut recevoir des valeurs de mesure de la tension aux bornes de la batterie 11. Plus généralement, les informations nécessaires au contrôle du courant et de la tension de charge sont transmises par le véhicule 10 vers le chargeur à travers le câble de charge 14. La borne de charge rapide 12 communique ainsi avec le véhicule 10, ce qui peut permettre une distribution de l'énergie plus adaptée au véhicule, et cela dans des conditions optimales de sécurité.

En particulier, le processeur 13 peut recevoir des valeurs de tension aux bornes de la batterie 11. Afin d'obtenir un chargement rapide, le processeur 13 peut imposer un chargement avec :
- une première phase à puissance constante au cours de laquelle la tension aux bornes de la batterie 11 va augmenter. La valeur de la puissance de chargement peut être fonction de la température extérieure. On pourra par exemple avoir recours à une cartographie.
- et une deuxième phase, cette fois à tension constante, par exemple, au cours de laquelle la charge de la batterie va se stabiliser.

Afin de diminuer le temps de charge de la batterie, on prévoit de prolonger la phase de charge rapide, à tension croissante, jusqu'à ce que la tension aux bornes de la batterie 11 atteigne une valeur de tension supérieure à la valeur de tension limite nécessaire correspondant à la capacité souhaitée.

Par exemple, la batterie peut avoir une valeur de tension limite de 4,08 volts, et la phase de charge se poursuit jusqu'à ce que la valeur de tension aux bornes de la batterie atteigne 4,1 volts, ou bien encore 4,126 volts.

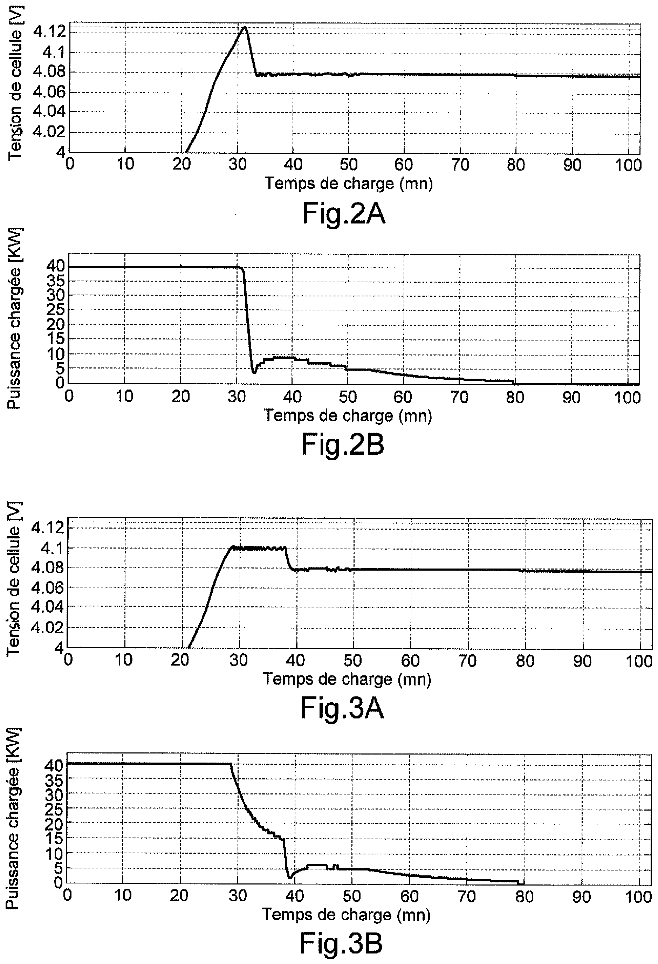

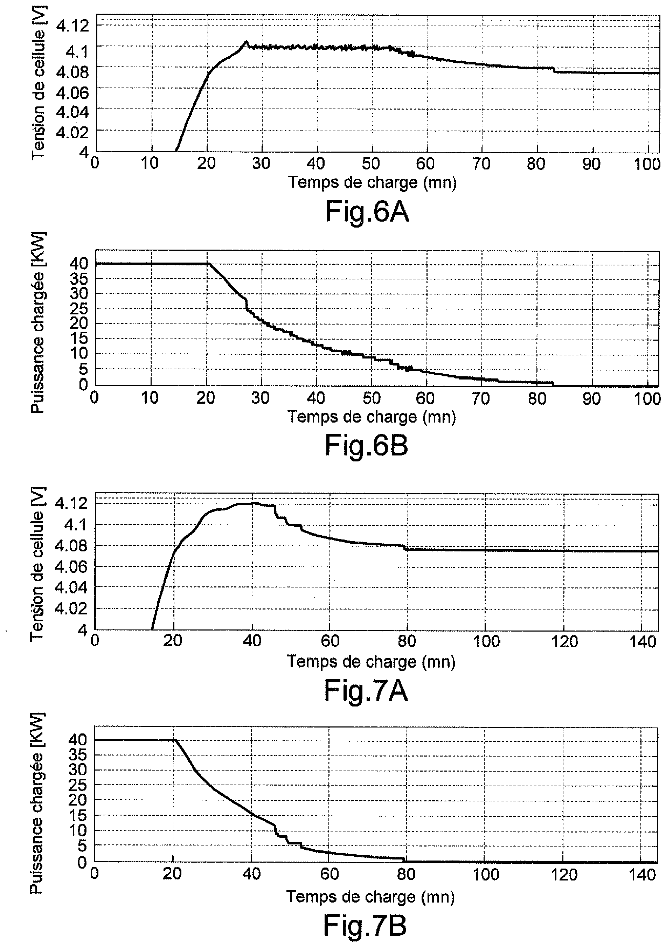

Les figures 2A, 2B, 3A, 3B, 4A, 4B, 5A, 5B illustrent différentes stratégies, lorsque la température extérieure est égale à 25°C. En revanche, les valeurs des figures 6A, 6B, 7a et 7B ont été mesurées pour une température extérieure de 15°C seulement.

En référence à la figure 2A, la phase de charge rapide dure jusqu'à t =32 mn environ, c'est-à-dire jusqu'à ce que la tension aux bornes de la batterie atteigne une valeur de 4,126 volts. On impose ensuite un chargement avec une valeur de tension constante à 4,08 volts.

La valeur de tension aux bornes de la batterie chute ainsi rapidement jusqu'à ce valeur cible, et la charge se poursuit jusqu'à t = 79 mn environ.

Le procédé appliqué est ainsi avantageux, car lorsqu'on applique un courant constant jusqu'à ce que la tension atteigne 4,08 volts, puis lorsqu'on maintient cette tension à 4,08 volts, il faut environ 81 mn pour réaliser la charge de la batterie.

Les figures 3A et 3B illustrent une autre stratégie dans laquelle, après une phase de charge rapide, jusqu'à ce que la tension aux bornes de la batterie atteigne 4,1 volts, on maintient cette tension à cette valeur de 4,1 volts pendant 10 mn, puis on impose une tension de 4,08 volts. La figure 3B montre que là encore le temps de charge est inférieur à 80 mn.

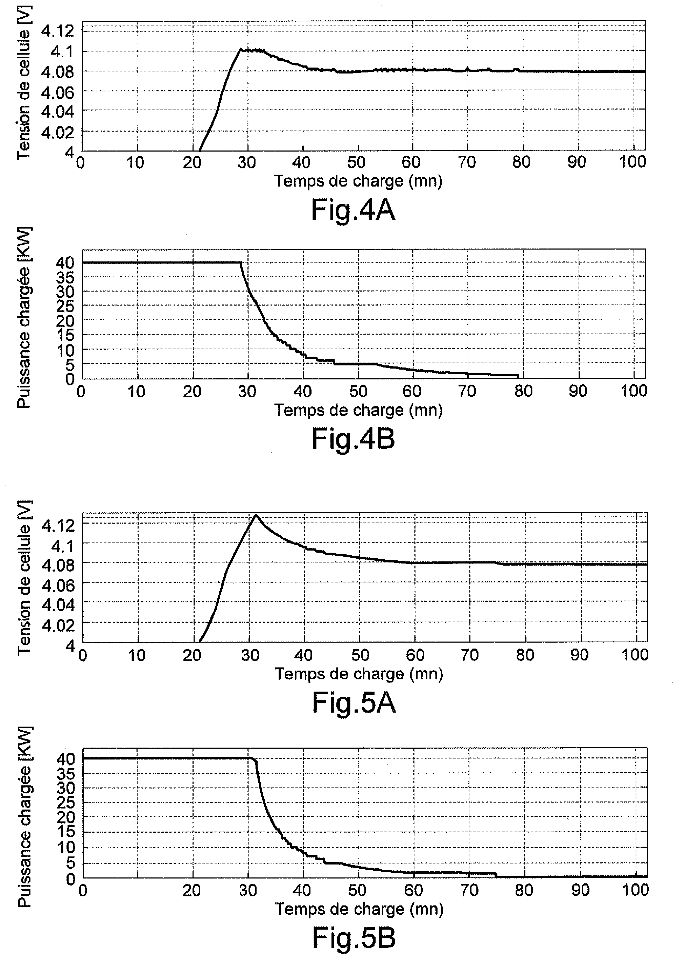

Les figures 4A et 4B correspondent à une troisième stratégie dans laquelle, après une phase de charge rapide jusqu'à ce que la tension aux bornes de la batterie atteigne 4,1 volts, on impose une tension de 4,1 volts pendant 5 mn, puis des paliers de puissance avec une valeur actualisée à chaque fois que le tension atteint une valeur cible, cette valeur cible diminuant au fur et à mesure jusqu'à atteindre une valeur de 4,08 volts.

Ce profil de puissance, appliqué à partir de t = 33 mn environ, peut être obtenu à partir d'une modélisation de la batterie.

Par exemple, on peut, sachant la puissance de charge appliquée et la tension courante aux bornes de la batterie, connaître la tension aux bornes de la batterie à l'instant d'échantillonnage suivant.

A partir de cette modélisation de la batterie, on peut calculer la puissance à appliquer à chaque pas d'échantillonnage pour atteindre une tension de 4,08 volts au bout d'un temps prédéterminé.

Lorsque cette stratégie est appliquée, le temps de charge est également légèrement inférieur à 80 mn.

Les figures 5A et 5B illustrent un autre mode de réalisation dans lequel, au cours de la phase de charge rapide, on charge la batterie jusqu'à ce que la tension à ses bornes atteigne 4,126 volts, et dans laquelle on applique directement un profil de puissance déterminé à partir d'une modélisation de la batterie. Dit autrement, la tension cible évolue au fur et à mesure de la charge avant d'atteindre 4,08 volts. Cette stratégie est relativement avantageuse en ce sens que le temps de charge est de seulement 75 mn environ.

Lorsque la température est plus faible, le gain de temps peut être plus important encore.

Par exemple, pour une température extérieure de 15 °C, lorsqu'on applique un procédé connu de l'art antérieur, dans lequel, au cours d'une phase de charge rapide, on charge la batterie avec un courant constant jusqu'à atteindre une tension de 4,08 volts, puis lorsque la tension aux bornes de la batterie atteint les 4,08 volts, on effectue la charge à une tension constante égale à 4,08 volts, le temps de chargement est d'environ 103 mn.

Lorsqu'une stratégie de chargement par paliers est appliquée, c'est-à-dire que l'on effectue la charge à courant constant, tant que la tension aux bornes de la batterie est inférieure à 4,08 volts, puis lorsque la tension aux bornes de la batterie atteint les 4,08 volts, on diminue la valeur du courant de charge en appliquant un facteur 0,8 ou 0,9, par exemple, le temps de chargement est proche de 113 mn.

Lorsque la température extérieure est de 15°C et que l'on applique une stratégie de charge avec :
- une phase de charge rapide avec une puissance constante tant que la tension aux bornes de batterie est inférieure à 4,08V, puis un profil de puissance jusqu'à ce que la tension aux bornes de la batterie atteigne 4,126 volts, et
- une phase d'absorption dans laquelle la tension aux bornes de la batterie est maintenue à 4,08 volts, la température extérieure étant inférieure à 15°C,
   le temps de chargement est légèrement supérieur à 100 mn.

Lorsque la température extérieure est de 15°C et que l'on applique une stratégie avec :
- une phase de charge rapide avec une puissance constante tant que la tension aux bornes de batterie est inférieure à 4,08V, puis un profil de puissance jusqu'à ce que la tension aux bornes de la batterie atteigne 4,126 volts, puis
- un phase d'absorption avec un maintien de la tension à 4,1 V pendant 10 mn suivi d'un maintien à 4,08 volts,
le temps de charge est proche de 101 minutes.

En référence aux figures 6A et 6B, on applique une stratégie avec :
- une phase de charge rapide avec une puissance constante tant que la tension aux bornes de batterie est inférieure à 4,08V, puis un profil de puissance jusqu'à ce que la tension aux bornes de la batterie atteigne 4,126 volts, puis
- une phase d'absorption avec une tension maintenue à 4,1 V jusqu'à t=56 minutes environ, puis un profil de puissance,
le temps de charge est proche de 86 minutes.

On pourra relever que la phase de charge rapide peut se dérouler en plusieurs temps, ici un premier temps avec une puissance constante et un deuxième temps avec une puissance suivant un profil décroissant. L'application de ce profil peut être avantageux en ce qu'il peut permettre de réduire la chute de puissance chargée lors du passage de la phase de charge rapide à la phase d'absorption.

Dans le mode de réalisation des figures 7A et 7B, on applique la stratégie des figures 5A et 5B, la température extérieure étant de 15°C. Le temps de charge passe alors en-deçà de 80 minutes. L'invention peut ainsi être particulièrement avantageuse lorsque la température extérieure est relativement faible.

On pourra relever que sur ces figures 2A à 7B le pas d'échantillonnage est relativement élevé, de sorte que certains points n'apparaissent pas.

## Revendications

1. Procédé de gestion de la charge d'une batterie comprenant :
commander une phase de charge rapide à tension croissante, puis
commander une phase d'absorption à courant décroissant régulé à une première valeur de tension,
le procédé étant **caractérisé en ce qu'**on commande la phase de charge rapide jusqu'à ce que la tension aux bornes de la batterie atteigne une deuxième valeur de tension strictement supérieure à la première valeur de tension, la première valeur de tension étant égale à une valeur de tension limite maximale et prédéfinie correspondant à la capacité et/ou l'énergie chargée(s) souhaitée(s) pour la batterie.

2. Procédé de gestion selon la revendication 1, dans lequel pendant une partie au moins de la phase de charge rapide, un courant de charge ou une puissance de charge est maintenu constant(e).

3. Procédé selon l'une des revendications 1 à 2, dans lequel, pendant une partie au moins de la phase d'absorption, la tension aux bornes de la batterie est maintenue constante.

4. Procédé selon l'une des revendications 1 à 3, comprenant, pendant une partie au moins de la phase d'absorption,
(a) imposer un courant de charge ou une puissance de charge constant,
(b) comparer que la valeur de la tension aux bornes de la batterie à un seuil,
(c) si la valeur de la tension la tension aux bornes de la batterie atteint ou dépasse ledit seuil, diminuer la valeur du courant de charge ou de la puissance de charge respectivement, et
(d) réitérer les étapes (a) à (d).

5. Procédé selon l'une des revendications 1 à 4, comprenant, pendant une partie au moins de la phase d'absorption, imposer un profil de puissance ou de courant, ledit profil étant déterminé à partir d'une modélisation de la batterie.

6. Produit programme d'ordinateur comprenant des instructions pour effectuer les étapes du procédé selon l'une des revendications 1 à 5 lorsque ces instructions sont exécutées par un processeur.

## Patentansprüche

1. Verfahren zum Steuern des Ladens einer Batterie, das Folgendes umfasst:
Steuern einer Schnellladephase mit zunehmender Spannung, dann
Steuern einer Absorptionsphase mit abnehmendem Strom, de auf einen ersten Spannungswert reguliert wird,
wobei das Verfahren **dadurch gekennzeichnet ist, dass** die Schnellladephase gesteuert wird, bis die Spannung an den Anschlüssen der Batterie einen zweiten Spannungswert erreicht, der streng größer als der erste Spannungswert ist, wobei der erste Spannungswert gleich einem maximalen und im Voraus definierten Grenzspannungswert ist, der der gewünschten geladenen Kapazität und/oder Energie für die Batterie entspricht.

2. Steuerverfahren nach Anspruch 1, wobei wenigstens während eines Teils der Schnellladephase ein Ladestrom oder eine Ladeleistung konstant gehalten wird.

3. Verfahren nach einem der Ansprüche 1 bis 2, wobei wenigstens während eines Teils der Absorptionsphase die Spannung an den Anschlüssen der Batterie konstant gehalten wird.

4. Verfahren nach einem der Ansprüche 1 bis 3, das wenigstens während eines Teils der Absorptionsphase Folgendes umfasst:
(a) Eingeben eines konstanten Ladestroms oder einer konstanten Ladeleistung,
(b) Vergleichen des Wertes der Spannung an den Anschlüssen der Batterie mit einem Schwellenwert,
(c) Verringern des Wertes des Ladestroms bzw. der Ladeleistung, falls der Wert der Spannung der Spannung an den Anschlüssen der Batterie den Schwellenwert erreicht oder überschreitet, und
(d) Wiederholen der Schritte (a) bis (d).

5. Verfahren nach einem der Ansprüche 1 bis 4, das wenigstens während eines Teils der Absorptionsphase umfasst, ein Leistungs- oder Stromprofil anzuwenden, wobei das Profil anhand einer Modellierung der Batterie bestimmt wird.

6. Computerprogrammprodukt, das Befehle enthält, um die Schritte des Verfahrens nach einem der Ansprüche 1 bis 5 auszuführen, wenn diese Befehle von einem Prozessor ausgeführt werden.

## Claims

1. Method for management of the charge of a battery comprising:
controlling a fast charge phase at increasing voltage, then
controlling an absorption phase at decreasing current regulated at a first voltage value,
the method being **characterized in that** the fast charge phase is controlled until the voltage across the terminals of the battery reaches a second voltage value strictly greater than the first voltage value, the first voltage value being equal to a predefined, maximum limiting voltage value corresponding to the desired charged capacity and/or energy for the battery.

2. Management method according to Claim 1, in which during at least a part of the fast charge phase, a charge current or a charge power is held constant.

3. Method according to either one of Claims 1 and 2, in which, during at least a part of the absorption phase, the voltage across the terminals of the battery is held constant.

4. Method according to one of Claims 1 to 3, comprising, during at least a part of the absorption phase,
(a) imposing a constant charge current or charge power,
(b) comparing the value of the voltage across the terminals of the battery with a threshold,
(c) if the value of the voltage the voltage across the terminals of the battery reaches or exceeds said threshold, reducing the value of the charge current or of the charge power, respectively, and
(d) iterating the steps (a) to (d).

5. Method according to one of Claims 1 to 4, comprising, during at least a part of the absorption phase,
imposing a power or current profile, said profile being determined based on a modeling of the battery.

6. Computer program product comprising instructions for carrying out the steps of the method according to one of Claims 1 to 5, when these instructions are executed by a processor.
